(19) Europäisches Patentamt
European Patent Office
Office européen des brevets

(11) **EP 1 868 010 B1**

(12) **FASCICULE DE BREVET EUROPEEN**

(45) Date de publication et mention
de la délivrance du brevet:
**19.11.2008 Bulletin 2008/47**

(51) Int Cl.:
**G01S 13/90** *(2006.01)*     **G01S 13/95** *(2006.01)*
**G01S 13/89** *(2006.01)*     **G01K 11/00** *(2006.01)*

(21) Numéro de dépôt: **07290707.4**

(22) Date de dépôt: **07.06.2007**

(54) **Radiomètre interférométrique**

Interferometer-Radiometer

Interferometric Radiometer

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **16.06.2006 FR 0605371**

(43) Date de publication de la demande:
**19.12.2007 Bulletin 2007/51**

(73) Titulaire: **AGENCE SPATIALE EUROPEENNE**
**F-75738 Paris Cedex 15 (FR)**

(72) Inventeurs:
• **De Maagt, Peter**
**2224 GL Katwijk (NL)**
• **Christensen, Jacob Björn**
**434 46 Kungsbacka (SE)**
• **Carlström, Anders**
**435 37 Mölnlycke (SE)**
• **Emrich, Anders Johan Gunnar**
**436 40 Askim (SE)**
• **Back Andersson, John Stefan**
**423 40 Torslanda (SE)**

(74) Mandataire: **Priori, Enrico et al**
**Cabinet Orès**
**36, rue de St. Pétersbourg**
**75008 Paris (FR)**

(56) Documents cités:
**FR-A1- 2 788 133          US-A- 4 724 439**

• **LAMBRIGTSEN O ET AL: "GeoSTAR - a synthetic aperture approach for a geostationary microwave sounder" AEROSPACE CONFERENCE, 2004. PROCEEDINGS. 2004 IEEE BIG SKY, MT, USA 6-13 MARCH 2004, PISCATAWAY, NJ, USA,IEEE, US, vol. 2, 6 mars 2004 (2004-03-06), pages 1008-1014, XP010748053 ISBN: 0-7803-8155-6**
• **BJORN LAMBRIGTSEN:[Online] 25 mai 2005 (2005-05-25), XP002422975 Extrait de l'Internet: URL:http://web.archive.org/web/20060221005 803re_/cimss.ssec.wisc.edu/itwg/itsc/itsc1 4/presentations/ session12/12_3_lambrigtsen .pdf> [extrait le 2007-03-02]**
• **STANKWITZ H C ET AL: "Advances in non-linear apodization for irregularly shaped and sparse two dimensional apertures" RADAR CONFERENCE, 2005 IEEE INTERNATIONAL ARLINGTON, VA, USA 9-12 MAY 2005, PISCATAWAY, NJ, USA, IEEE, 9 mai 2005 (2005-05-09), pages 635-640, XP010801774 ISBN: 0-7803-8881-X**
• **LAMBRIGTSEN B ET AL: "GeoSTAR - a microwave sounder for geostationary satellites" GEOSCIENCE AND REMOTE SENSING SYMPOSIUM, 2004. IGARSS '04. PROCEEDINGS. 2004 IEEE INTERNATIONAL ANCHORAGE, AK, USA 20-24 SEPT. 2004, PISCATAWAY, NJ, USA, IEEE, vol. 2, 20 septembre 2004 (2004-09-20), pages 777-780, XP010751002 ISBN: 0-7803-8742-2**

• MARTIN-NEIRA M ET AL: "MIRAS, a two-dimensional aperture synthesis radiometer" GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRETATION., INTERNATIONAL PASADENA, CA, USA 8-12 AUG. 1994, NEW YORK, NY, USA,IEEE, US, vol. 3, 8 août 1994 (1994-08-08), pages 1323-1325, XP010138556 ISBN: 0-7803-1497-2

• MARTIN-NEIRA M ET AL: "MIRAS - A TWO-DIMENSIONAL APERTURE-SYNTHESIS RADIOMETER FOR SOIL-MOISTURE AND OCEAN-SALINITY OBSERVATIONS" ESA BULLETIN, ESA SCIENTIFIC AND PUBLICATIONS BRANCH, NOORDWIJK, NL, no. 92, novembre 1997 (1997-11), pages 95-104, XP000732088 ISSN: 0376-4265

**Description**

L'invention concerne un radiomètre interférométrique destiné à l'imagerie d'une émission de rayonnement d'une scène cible.

Plus particulièrement, mais sans toutefois être limité à cette application particulière, l'invention concerne un radiomètre interférométrique embarqué sur un véhicule spatial destiné à l'imagerie d'une émission de rayonnement d'une surface planétaire. Le radiomètre conforme à l'invention est particulièrement bien adapté pour imager la Terre dans une bande micro-ondes, et notamment dans les longueurs d'ondes millimétriques ou submillimétriques, depuis une orbite géostationnaire.

Le terme « surface planétaire » doit être compris au sens large, de sorte qu'il ne désigne pas seulement les surfaces des planètes de type terrestre et des planètes gazeuses, mais aussi celles des satellites, astéroïdes, comètes, etc.

Les radiomètres à micro-ondes embarqués sur un véhicule spatial constituent un complément de l'imagerie optique dans le spectre visible et infrarouge en procurant des profils verticaux de température et d'humidité à travers l'atmosphère, même en présence de nuages, ainsi que des informations relatives aux précipitations. Fréquemment, ces radiomètres fonctionnent dans un mode d'observation au nadir ; ils effectuent des mesures passives et sont capables de discriminer des rayonnements reçus de différents niveaux dans l'atmosphère par observation de l'élargissement spectral de raies d'émission.

Les radiomètres de génération actuelle sont embarqués sur des satellites en orbite basse (LEO), qui orbitent à une altitude comprise entre environ 300 et 900 km. Du fait de l'altitude relativement faible de ces satellites, on obtient une résolution spatiale satisfaisante de l'ordre de quelques dizaines de kilomètres autour du nadir dans le domaine spectral compris entre 50 - 100 GHz au moyen d'une antenne unique de diamètre égal ou inférieur à 1 m environ. On rappelle que le critère de Rayleigh pour la résolution spatiale dans le cas d'une observation au nadir est :

$$r \approx \frac{1.22\lambda}{D} R \qquad [1]$$

où r est le pouvoir de résolution (taille de la plus petite caractéristique spatiale résolue), $\lambda$ la longueur d'onde du rayonnement, D le diamètre de l'antenne et R la distance antenne/sol. Dans le cas d'une observation suivant un angle incliné *(off-nadir),* la résolution spatiale est fortement dégradée.

Les radiomètres LEO présentent une fauchée de mesure d'environ 2000 km et assurent une couverture globale de la surface terrestre grâce à leur mouvement orbital. En conséquence, ces instruments ne peuvent pas procurer une couverture continue de la même région de la Terre : typiquement, leur délai de revisite est de l'ordre de 2 - 3 jours. Ainsi, les radiomètres LEO présentent une bonne résolution spatiale mais leur résolution temporelle est médiocre.

Une résolution temporelle bien meilleure, et idéalement une surveillance permanente, est nécessaire afin de suivre en temps réel l'évolution d'épisodes intéressants d'un point de vue météorologique, tels que des ouragans approchant d'une côte ou la formation de tempêtes (prévision à très court terme ou *« nowcasting »*). Ceci ne peut être obtenu qu'en embarquant un radiomètre sur un satellite géostationnaire (GEO), orbitant à une altitude d'environ 36000 km. Toutefois, compte tenu de la distance Terre-instrument fortement augmentée, une antenne d'un diamètre irréalisable serait nécessaire afin d'obtenir une résolution spatiale similaire à celle des radiomètres LEO. Par exemple, pour atteindre une résolution linéaire de 30 km (correspondant à une résolution angulaire inférieure à 1 milliradian) à 50 GHz, un réflecteur de 8 m de diamètre et présentant une rugosité de surface inférieure à 0,1 mm serait nécessaire. Actuellement, il n'est pas possible de lancer et de déployer une antenne de cette taille et avec cette finition de surface en orbite GEO. Ainsi, l'art antérieur ne permet pas d'obtenir une imagerie micro-ondes de la Terre à partir d'une orbite GEO, avec une résolution spatiale satisfaisante.

Afin de contourner ce problème, la NASA développe actuellement un dispositif de démonstration au sol pour un radiomètre fonctionnant à 50-GHz (GeoSTAR) basé sur le principe d'interférométrie ou de synthèse d'ouverture. Ce concept est décrit dans les publications "A Microwave Sounder for GOES-R: A GeoSTAR Progress Report", par B. H. Lambrigsten, P. P. Kangaslahti, A. B. Tanner et W. J. Wilson, 14ème International TOVS Study Conference, Pékin, R.P. Chine ; 25-31 Mai 2005; et B. Lambrigsten et al. "GeoSTAR - a synthetic aperture approach for a geostationary microwave sounder", 2004 IEEE Aerospace Conference Proceedings, Vol. 2, March 6,2004, pages 1008-1014.

Le radiomètre GeoSTAR proposé consiste en un réseau en Y de récepteurs micro-ondes qui fonctionnent en mode hétérodyne I/Q, toutes les antennes étant pointées dans la même direction. Un sous-système numérique calcule les corrélations croisées entre les signaux convertis en fréquence de toutes les paires de récepteurs possibles ; de cette manière, chaque paire d'antennes constitue, avec le corrélateur associé, un interféromètre. Le signal complexe de corrélation croisée, exprimé comme une fonction de l'espacement entre antennes ("ligne de base" ou *"baseline"),* est dénommé "fonction de visibilité" et est essentiellement la transformée de Fourier de la luminance de la scène observée, exprimée en fonction de l'angle d'incidence. Une image peut alors être reconstruite en calculant la transformée de Fourier inverse de la fonction de visibilité. Le réseau en Y conduit à un échantillonnage du domaine bidimensionnel de fréquences spatiales (dénommé plan u-v) suivant une trame hexagonale, et le nombre d'échantillons est de l'ordre de N·(N-1), où N est le nombre d'antennes individuelles.

Conformément au critère d'échantillonnage de Nyquist, le champ de vision non ambigu est déterminé par l'espacement minimum entre paires d'antennes. Pour une couverture terrestre totale, ce champ de vision doit être supérieur au diamètre angulaire du disque terrestre tel que vu depuis une orbite GEO, soit environ 17,5°. Ceci conduit à un espacement maximum entre éléments récepteurs égal à environ 3,5 longueurs d'onde, soit 2,1 cm à 50 GHz. Dans la pratique, ceci conduit à une configuration compacte d'antennes de réception montées bord à bord. Ceci signifie que, dans un tel système selon l'art antérieur, il y a une relation directe entre le pouvoir de résolution, qui détermine la longueur de la ligne de base la plus longue, et par conséquent la longueur des bras du réseau en Y, et le nombre d'éléments récepteurs sur chaque bras. Par exemple, pour obtenir une résolution spatiale de 30 km à 50 GHz, une ligne de base de 8 mètres est nécessaire ; ceci correspond à environ 200 récepteurs par bras, ou encore un total de 600 récepteurs.

Le critère d'échantillonnage peut être relaxé si un champ de vision plus faible est exigé, par exemple si seulement une région limitée de la surface terrestre est à imager.

Ainsi, le concept de radiomètre à synthèse d'ouverture proposé conduit à un nombre important de récepteurs, et par conséquent à une masse qui n'est pas viable ainsi qu'à une puissance consommée élevée. Ce concept selon l'art antérieur présente également d'autres inconvénients.

Tout d'abord, le calibrage en amplitude et en phase d'un nombre aussi important de récepteurs est extrêmement difficile.

Un autre inconvénient tient à ce que le diagramme de réception de l'ouverture synthétisée présente des lobes secondaires très marqués, sauf si une fonction de pondération est appliquée pour la mise en forme du faisceau. Etant donné que l'utilisation du critère de Nyquist impose une configuration sensiblement compacte des antennes sur les bras du réseau, le concepteur de l'instrument ne dispose d'aucune liberté pour modifier la distribution géométrique des points d'échantillonnage dans le plan u-v afin d'améliorer la forme du diagramme de réception synthétisé.

Un autre inconvénient tient à ce que les exigences de sensibilité, résolution spatiale et champ de vision ne peuvent pas être satisfaites simultanément, mais sont étroitement liées. Il est donc difficile de trouver un compromis satisfaisant entre ces exigences.

Encore un autre inconvénient tient au fait que le radiomètre, du fait du type et de la configuration géométrique des antennes, ne peut fonctionner que dans une bande unique. Compte tenu du nombre important d'éléments requis même en fonctionnement monobande et de leur configuration compacte, un fonctionnement multibande est particulièrement difficile à mettre en oeuvre.

L'invention vise à résoudre au moins certains des problèmes décrits plus haut, afin de procurer un radiomètre qui soit bien adapté pour une imagerie de la Terre dans les micro-ondes, et plus particulièrement dans les ondes millimétriques et submillimétriques, depuis une orbite géostationnaire. Les « ondes millimétriques et submillimétriques » correspondent approximativement à une fréquence comprise entre 30 GHz et 3 THz, mais l'invention peut être mise en oeuvre dans une plage de fréquences plus large, par exemple entre environ 1 GHz et 10 THz.

Conformément à la présente invention, cet objectif est atteint par un radiomètre interférométrique comprenant un réseau peu dense d'éléments récepteurs que l'on fait tourner autour d'un axe dirigé vers la scène observée. La rotation permet d'obtenir un échantillonnage satisfaisant du plan u-v même sans qu'il soit nécessaire d'utiliser un réseau complet d'éléments montés bord à bord. Bien que le critère de Nyquist ne soit pas satisfait à chaque instant, l'ouverture est totalement échantillonnée au cours d'une demi-rotation. Ceci entraîne une réduction très forte du nombre d'éléments récepteurs, par exemple d'un facteur compris entre 4 et 6, dans les exemples décrits ci-après, ce qui rend viable une imagerie en haute résolution de la Terre depuis une orbite GEO. En outre, étant donné qu'un assemblage compact des récepteurs n'est plus exigé, la distribution spatiale des échantillons dans le plan u-v peut être optimisée avec soin de manière à réduire les lobes secondaires des diagrammes de réception d'ouverture synthétisés. L'utilisation d'un réseau de détecteurs de faible densité rend également possible une imagerie multibande. Un autre avantage important procuré par l'invention tient à ce que la rotation du réseau facilite le calibrage de façon significative.

On notera que le principe de l'échantillonnage par rotation est particulièrement bien adapté à l'imagerie terrestre depuis une orbite GEO, étant donné que l'instrument est stationnaire par rapport à la scène observée. Une imagerie depuis une orbite LEO reste toutefois possible, mais est rendue plus complexe par la nécessité de prendre en compte le déplacement relatif du satellite avec radiomètre embarqué par rapport au sol.

Plus précisément, un objet de l'invention est de procurer un radiomètre interférométrique destiné à l'imagerie d'une émission de rayonnement d'une scène cible, comprenant :

- une pluralité d'éléments récepteurs pour recevoir ledit rayonnement, lesdits éléments récepteurs étant agencés sous forme d'un réseau bidimensionnel ou tridimensionnel ;

- des premiers moyens de traitement du signal pour calculer un ensemble bidimensionnel ou tridimensionnel d'échantillons d'une fonction de visibilité de ladite émission de rayonnement par corrélation croisée par paire des signaux reçus par lesdits éléments récepteurs ; et
- des seconds moyens de traitement du signal pour reconstruire une image de l'intensité de ladite émission de rayonnement à partir desdits échantillons de ladite fonction de visibilité ;

caractérisé en ce qu'il comprend en outre des moyens de rotation dudit réseau bidimensionnel ou tridimensionnel d'éléments récepteurs autour d'un axe de rotation qui est sensiblement dirigé vers ladite scène cible;
et en ce que lesdits seconds moyens de traitement du signal sont adaptés pour reconstruire ladite image de l'intensité à partir d'une pluralité d'ensembles bidimensionnels d'échantillons de ladite fonction de visibilité, chacun desdits ensembles d'échantillons correspondant à une position angulaire différente dudit réseau bidimensionnel ou tridimensionnel d'éléments récepteurs.

Plus précisément, un objet de l'invention est de procurer un radiomètre interférométrique embarqué sur un véhicule spatial qui soit adapté pour procéder à l'imagerie d'une surface planétaire.

Conformément à certains modes particuliers de réalisation de l'invention :

Ledit réseau d'éléments récepteurs peut être sensiblement bidimensionnel et perpendiculaire audit axe de rotation.

Les espacements entre lesdits éléments récepteurs peuvent être choisis de telle manière à ne pas être constants, ni des multiples entiers d'un espacement minimal. En particulier, l'agencement desdits éléments récepteurs peut être choisi de telle manière à définir une distribution non uniforme desdits échantillons de ladite fonction de visibilité dans un domaine bidimensionnel de fréquences spatiales, en assurant que les lobes secondaires d'un diagramme de réception synthétisé dudit radiomètre interférométrique présentent une amplitude normalisée inférieure ou égale à - 20 dB, et de préférence inférieure ou égale à -40 dB. De manière avantageuse, la distribution desdits échantillons de ladite fonction de visibilité dans un domaine bidimensionnel de fréquences spatiales peut être approchée par une fonction d'apodisation, telle qu'une fonction Gaussienne, fonction cosinusoïdale, une fenêtre de Hamming, ou une fenêtre de Hanning.

Lesdits moyens de rotation dudit réseau bidimensionnel ou tridimensionnel peuvent être adaptés pour opérer à une vitesse de rotation comprise entre 0,001 et 100 tr/min, et en particulier entre 0,01 et 10 tr/min, et de préférence entre 0,1 et 1 tr/min.

Lesdits éléments récepteurs peuvent être adaptés pour recevoir un rayonnement électromagnétique dans au moins une bande de fréquences comprise dans le domaine spectral 1 GHz - 10 THz, ou plus particulièrement dans le domaine spectral 30 GHz - 400 GHz.

La largeur dudit réseau bidimensionnel d'éléments récepteurs perpendiculaire audit axe de rotation est avantageusement suffisante pour procurer une résolution angulaire de l'image d'intensité reconstruite qui soit inférieure ou égale à 7 milliradians, et de préférence inférieure ou égale à 1 milliradian, au moins dans ladite bande de fréquences.

En outre, le nombre et l'agencement desdits éléments récepteurs sont définis avantageusement de telle manière que, après une demi-rotation du réseau bidimensionnel rotatif, la densité d'échantillonnage résultante pour ladite fonction de visibilité soit suffisante pour fournir un champ de vision non ambigu présentant une largeur supérieure ou égale à 17°, au moins dans ladite bande de fréquences.

Avantageusement, l'axe de rotation peut traverser sensiblement le centre d'inertie dudit réseau bidimensionnel ou tridimensionnel d'éléments récepteurs.

Lesdits éléments récepteurs peuvent être alignés le long d'une pluralité de bras linéaires. En particulier, le radiomètre interférométrique peut comporter trois bras linéaires espacées angulairement de 120° les uns par rapport aux autres de manière à former un réseau en Y, ledit axe de rotation traversant le centre dudit réseau.

De façon avantageuse, le nombre et l'espacement des éléments récepteurs sont identiques sur chacun desdits bras linéaires.

Lesdits premiers moyens de traitement du signal peuvent être avantageusement adaptés de manière à introduire une pluralité de décalages temporels relatifs entre lesdits signaux reçus devant faire l'objet d'une corrélation croisée, et à calculer des fonctions de visibilité fonction du décalage temporel, lesdits seconds moyens de traitement du signal étant adaptés pour reconstruire une image multibande de ladite émission de rayonnement en effectuant la transformée de Fourier desdites fonctions de visibilité fonction du décalage temporel.

Le radiomètre interférométrique selon l'invention peut en outre comprendre des moyens de calibrage de phase et/ou d'amplitude relatifs, adaptés pour comparer les ensembles d'échantillons de ladite fonction de visibilité correspondant à différentes positions angulaires dudit réseau d'éléments récepteurs rotatif, et récupérer les informations de calibrage de phase et/ou d'amplitude relatifs au moyen de ladite comparaison. En particulier, lesdits moyens de calibrage peuvent être adaptés de telle manière à comparer des ensembles d'échantillons de ladite fonction de visibilité correspondant à des positions angulaires décalées d'une demi-rotation. Dans le cas où le réseau d'éléments récepteurs rotatif présente, au moins approximativement, une symétrie discrète en rotation (par exemple, une symétrie de rotation de 60°), lesdits moyens de calibrage peuvent être adaptés pour comparer des ensembles d'échantillons de ladite fonction de visibilité correspondant à des positions angulaires qui diffèrent d'un angle correspondant à ladite symétrie discrète en rotation.

Les éléments récepteurs peuvent être adaptés pour distinguer entre deux composantes de polarisation le rayonnement reçu, et lesdits seconds moyens de traitement du signal peuvent être adaptés pour reconstruire deux images d'intensité correspondant à différentes composantes de polarisation pour ladite émission de rayonnement. En particulier, lesdits seconds moyens de traitement du signal peuvent être adaptés pour calculer les paramètres de Stokes du rayonnement reçu.

Un radiomètre interférométrique multibande peut comprendre une pluralité de radiomètres interférométriques individuels, tels que décrits plus haut, dont les réseaux bidimensionnels ou tridimensionnels d'éléments récepteurs sont montés sur une structure rotative commune, chacun desdits radiomètres interférométriques individuels étant adapté pour fonctionner dans une bande spectrale différente.

Dans un mode de réalisation avantageux, chacun desdits radiomètres interférométriques individuels comprend une pluralité de bras linéaires le long desquels sont alignés les éléments récepteurs correspondants, les bras linéaires desdits radiomètres interférométriques étant mutuellement parallèles.

D'autres caractéristiques et avantages de la présente invention apparaîtront à la lumière de la description qui suit, avec référence aux dessins annexés, dans lesquels :

- La Figure 1 est une illustration schématique d'un radiomètre interférométrique conforme à la présente invention ;
- La Figure 2 illustre le principe de la radiométrie interférométrique utilisant un réseau stationnaire en Y d'éléments récepteurs, connu de l'art antérieur ;
- La Figure 3 illustre le traitement du signal utilisé pour la reconstruction d'images conforme à l'invention ;
- La Figure 4A illustre schématiquement un exemple de radiomètre interférométrique multibande selon un mode de réalisation de l'invention ;
- La Figure 4B est une vue à plus grande échelle de la partie centrale du radiomètre interférométrique de la figure 4A ; et
- La Figure 5 est un schéma de principe illustrant le principe du calibrage à ligne de base inversée.

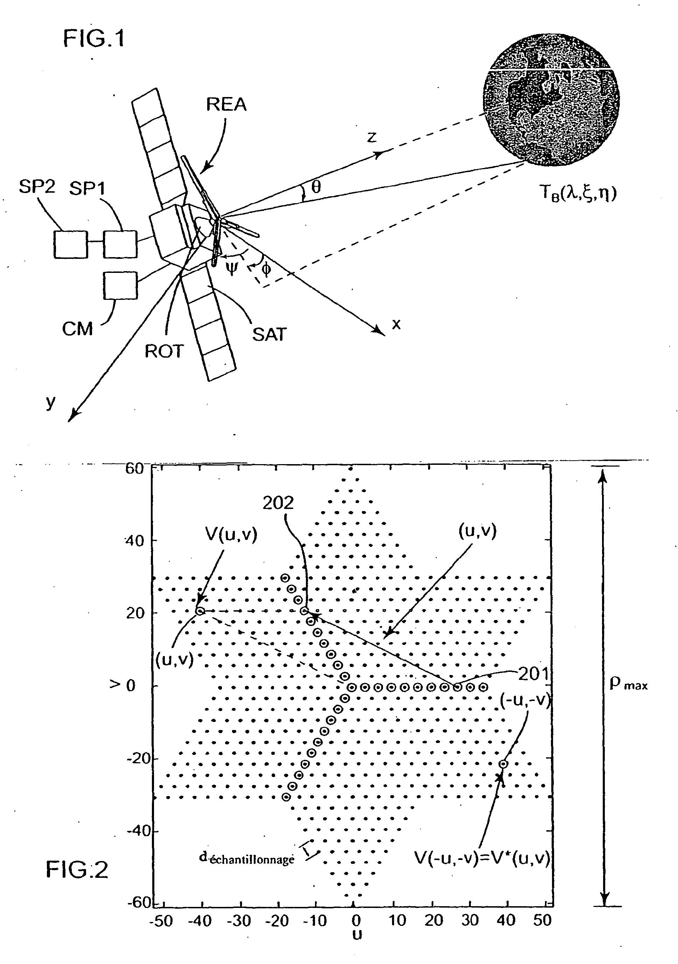

La Figure 1 donne une vue générale d'un radiomètre interférométrique embarqué sur un véhicule spatial, conforme à l'invention, utilisé, par exemple, pour imager la Terre depuis une orbite géostationnaire. La figure procure également une définition du système de coordonnées qui sera utilisé dans l'ensemble de la description suivante.

Le radiomètre interférométrique est porté par un véhicule spatial SAT stabilisé selon 3 axes, qui peut être un bus standard pour satellites géostationnaires de télécommunication. Il comprend essentiellement un réseau bidimensionnel d'éléments récepteurs, REA, qui, dans un mode préféré de réalisation, est en forme de Y, des moyens ROT pour faire tourner le réseau REA autour d'un axe (z) pointé vers le centre de la Terre par rapport au véhicule spatial non rotatif SAT, à une vitesse angulaire de l'ordre de 0,1 - 1 tr/min, des moyens de traitement du signal SP1, SP2 et des moyens de calibrage CM. Afin de compenser l'effet exercé par l'ensemble rotatif REA sur la dynamique d'orientation du véhicule spatial SAT, ce dernier peut être avantageusement équipé d'une roue de réaction à rotation inverse.

Le choix de la vitesse de rotation mérite d'être brièvement abordé. D'un point de vue mécanique, la rotation doit être de préférence aussi lente que possible de manière à réduire les forces exercées sur le véhicule spatial et à simplifier le système de compensation des moments. Une limite basse pour la vitesse de rotation est fixée par le taux de répétition d'images, étant donné qu'au moins une demi-rotation est nécessaire pour former une image. Une vitesse de rotation légèrement plus élevée est préférée de manière à assurer que la fonction de calibrage opère sur une image qui peut être considérée comme étant stable. La stabilité en phase et en amplitude doit être également prise en compte : des dérives importantes nécessitent des calibrages plus fréquents, et par conséquent une vitesse plus élevée.

L'ensemble rotatif REA est constitué de trois bras linéaires espacés mutuellement de 120° de manière à former un Y, l'axe de rotation de l'ensemble passant à proximité du centre dudit Y. Chaque bras porte un certain nombre d'éléments récepteurs (depuis environ 50 jusqu'à plus de 400, selon l'application particulière concernée), chacun étant constitué par une antenne de réception et l'électronique frontale associée. L'antenne est typiquement une antenne cornet ou une antenne à lentille intégrée. L'électronique frontale assure l'amplification, la conversion à une fréquence intermédiaire et éventuellement la numérisation des signaux reçus.

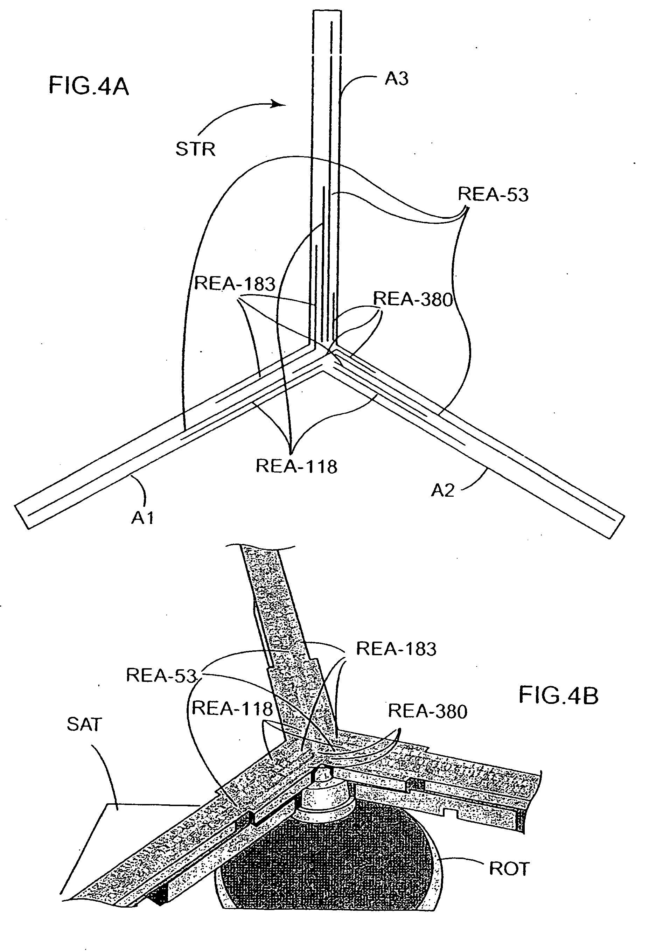

Une description détaillée de la configuration géométrique des éléments récepteurs sera donnée plus loin, avec référence aux figures 4A et 4B.

L'émission de rayonnement de la scène observée (par exemple le disque terrestre ED) à la longueur d'onde $\lambda$ peut être mesurée par sa température de luminance $T_B(\lambda,\xi,\eta)$, où :

$$\xi = \sin\theta \cos\phi$$

$$\eta = \cdot \sin\theta \sin\phi$$

Les coordonnées sphériques θ et φ sont définies sur la figure 1; l'origine du système de coordonnées coïncide avec le centre du radiomètre, l'axe z est dirigé vers le centre de la Terre et l'axe y est parallèle à l'axe de rotation de la terre et est pointé vers le sud. L'angle ψ mesure la position angulaire du réseau d'éléments récepteurs REA dans le plan x-y.

Les premiers moyens de traitement du signal SP1 reçoivent en entrée les signaux reçus par les différents éléments récepteurs du radiomètre interférométrique et calculent la fonction dite de visibilité, V. Ensuite, les seconds moyens de traitement du signal SP2 reçoivent en entrée ladite fonction de visibilité et reconstruisent la distribution des températures de luminance $T_B(\lambda,\xi,\eta)$ du disque terrestre observé ED. L'image reconstruite est ensuite transmise au sol par des moyens de communication non représentés.

Des moyens de calibrage CM sont également prévus de manière à compenser les dérives du gain complexe des éléments récepteurs. En l'absence de calibrage, lequel doit être effectué pendant toute la durée de vie utile de l'instrument, ces dérives rendraient impossible la récupération d'images utiles.

On rappelle maintenant, avec référence à la figure 2, les principes de base de l'imagerie interférométrique au moyen d'un récepteur stationnaire, connue de l'art antérieur.

Sur cette figure, les cercles représentent des éléments récepteurs individuels, lesquels sont équidistants le long de trois bras formant une figure en Y. Considérons deux éléments récepteurs 201 et 202 présentant des gains complexes propres $g_{201}$ et $g_{202}$, chaque élément récepteur étant identifié par ses coordonnées $(x_i,y_i, z_i=0)$, i=201,202. On définit la "ligne de base", ou vecteur de distance, (u,v) comme suit :

$$u = \frac{\Delta x}{\lambda} = \frac{x_{202} - x_{201}}{\lambda}, v = \frac{\Delta y}{\lambda} = \frac{y_{202} - y_{201}}{\lambda}$$

La fonction de visibilité est définie comme étant la corrélation croisée complexe des signaux reçus par une quelconque paire d'éléments récepteurs, exprimée en fonction de la ligne de base (u,v) correspondante :

$$V(u,v) = \frac{1}{4\pi} \int\limits_{-1}^{1}\int\limits_{-1}^{1} G(\xi,\eta) T_B(\xi,\eta) e^{j2\pi(u\xi+v\eta)} \frac{d\xi d\eta}{\sqrt{1-\xi^2-\eta^2}} \qquad [2]$$

A des fins de simplification, on a supposé dans l'équation 2 que le gain complexe est identique pour tous les éléments récepteurs et le gain (réel) $G(\xi,\eta)$ a été défini comme étant égal à $G(\xi,\eta)=g_{201}(\xi,\eta)\cdot g^*202(\xi,\eta)$. En outre, l'influence sur V, $T_B$ et G de la longueur d'onde λ a été omise.

Outre les gains d'antenne, l'équation [2] montre que la fonction de visibilité correspond essentiellement à la Transformée de Fourier de la température de luminance de la scène observée, u et v représentant les fréquences spatiales. Etant donné que $T_B(\xi,\eta)$ a pour résultat des valeurs réelles, la visibilité V(u,v) est hermitienne, soit V(-u,-v) =V*(u,v), où "*" représente l'opérateur de conjugaison complexe.

A partir d'une mesure de la visibilité dans le plan u-v (qui est un domaine bidimensionnel de fréquences spatiales), on peut reconstruire la distribution spatiale de la température de luminance de la scène observée par une simple Transformée inverse de Fourier :

$$\hat{T}_B(\xi,\eta) = 4\pi \frac{\sqrt{1-\xi^2-\eta^2}}{G(\xi,\eta)} \int\limits_{-\infty}^{\infty}\int\limits_{-\infty}^{\infty} w\left(\sqrt{u^2+v^2}\right) \hat{V}(u,v) e^{-j2\pi(u\xi+v\eta)} du dv \qquad [3]$$

où $w(\sqrt{u^2+ v^2})$ est une fonction de pondération, normalisée de telle manière que w(0)=1, laquelle est utilisée pour réduire les lobes secondaires résultant de la troncature de la fonction de visibilité en correspondance de la longueur de ligne de base maximale. On peut opter avantageusement pour une fonction de pondération de type Gaussien :

$$w(\rho) = e^{-\rho^2/\rho_0^2}$$ , où $\rho = \sqrt{u^2+v^2}$. Le facteur d'échelle $\rho_0$ est généralement choisi de sorte à être compris entre environ 60 - 70% de la longueur de ligne de base maximale, ce qui assure que la fonction de pondération Gaussienne conduise à une valeur qui retombe au dessous de 0,1 pour la longueur de ligne de base maximale.

Sur la figure 2, les points représentent les lignes de base associées à chaque paire d'éléments récepteurs. Par exemple, le point indiqué par la référence (u,v) correspond à la ligne de base orientée de l'élément 201 vers l'élément 202, tandis que (-u,-v) est la ligne de base inversée, orientée de l'élément 202 vers l'élément 201. En principe, pour un réseau de N récepteurs, N·(N-1) lignes de base sont formées (y compris les lignes de base inversées) ; dans la pratique, une redondance élevée existe toutefois, ce qui signifie que de nombreuses lignes de base coïncident ; en conséquence, le nombre effectif de lignes de base indépendantes est significativement plus faible. La Figure 2 montre qu'un réseau en Y d'éléments récepteurs équidistants produit un réseau hexagonal régulier de lignes de base dans le plan u-v. Un calcul de la corrélation croisée pour toutes les paires d'éléments récepteurs disponibles (équation [2]) conduit à la fonction de visibilité V(u,v) de la scène observée, échantillonnée dans le plan u-v par ledit réseau de lignes de base.

La résolution spatiale de la distribution des températures de luminance $\hat{T}_B(\xi,\eta)$ est déterminée par la longueur de ligne de base maximale $\rho_{max} = max(\sqrt{u^2+v^2})$, voir équation [1]. Plus précisément, la résolution est finalement définie par le facteur d'échelle $\rho_0$ de la fonction de pondération w(p) utilisée pour la reconstruction d'image, lequel est à quant à lui choisi de sorte à être proportionnel à $\rho_{max}$. En outre, on sait par la théorie de l'échantillonnage que, pour éviter toute distorsion de repliement, l'échantillonnage de la fonction de visibilité doit être suffisamment dense pour satisfaire au critère de Nyquist pour un champ de vision non ambigu couvrant la totalité du disque terrestre. Pour une observation depuis une orbite GEO :

$$d_{\acute{e}chantillonnage} \leq \frac{R_{GEO}}{2R_{Terre}} \lambda \approx 3,3\lambda \qquad\qquad [4]$$

où $R_{GEO}$ est le rayon d'une orbite géostationnaire, $R_{Terre}$ est le rayon de la Terre et $d_{\acute{e}chantillonnage}$ la distance maximale entre des points adjacents du réseau de lignes de base. Comme décrit plus haut, l'équation [4] détermine l'espacement maximal autorisé des éléments récepteurs individuels qui constituent le réseau en Y de la figure 2. Ce critère, combiné aux exigences de résolution qui déterminent la taille du réseau, détermine de façon presque univoque le nombre d'éléments récepteurs.

On comprendra désormais pourquoi il a été impossible, jusqu'à présent, d'imager la Terre dans les longueurs d'ondes millimétriques depuis une orbite GEO avec une résolution spatiale satisfaisante. On notera, au vu de l'équation [1], qu'afin d'obtenir une résolution spatiale de l'ordre de 30 km, correspondant à une résolution angulaire d'environ 1 milliradian, à 50 GHZ une ligne de base $\rho_{max}$ maximale d'environ 8m est nécessaire ; prenant en compte la configuration en Y du réseau REA, ceci conduit à des bras de longueur égale à environ 4 m. Le critère d'échantillonnage de Nyquist conduit, sur la base de l'équation [4], à un nombre total de récepteurs égal à environ 630. Il est très difficile de réaliser un instrument d'une telle complexité, ainsi que de le placer sur une orbite GEO et de le calibrer afin d'obtenir des images utiles.

L'idée à la base de la présente invention est que le fait de faire tourner le réseau d'éléments récepteurs REA et d'augmenter la base d'échantillons de la fonction de visibilité correspondant à différentes positions angulaires permet de réduire très significativement le nombre d'éléments récepteurs, et par conséquent la complexité, la masse, la puissance consommée et les exigences de calibrage du radiomètre. En outre, l'invention procure également d'autres avantages significatifs qui sont décrits ci-après.

Si l'on tente de réduire le nombre d'éléments récepteurs dans un radiomètre interférométrique stationnaire en Y, en augmentant simplement l'espacement inter-élément, le réseau de lignes de base correspondant dans le plan u-v conserverait la même forme hexagonale, mais présenterait une densité d'échantillonnage fortement diminuée. Comme décrit plus haut, un échantillonnage insuffisant de la fonction de visibilité induirait de nombreuses erreurs liées à la distorsion de repliement pour la distribution de températures de luminance reconstruite, rendant celle-ci pratiquement inutile.

C'est dans ce contexte que la rotation du réseau d'éléments récepteurs entre en jeu. Conformément à l'invention, on fait tourner ledit réseau autour de l'axe z et une acquisition de vues instantanées (« snapshots ») de la fonction de visibilité a lieu à intervalles réguliers pendant une demi-rotation. Chaque vue instantanée échantillonne la fonction de visibilité de la scène observée pour une certaine valeur de rotation du réseau de lignes de base peu dense. En additionnant des ensembles d'échantillons correspondant à chaque position angulaire, on obtient un échantillonnage dense de V(u, v) sur un réseau circulaire de lignes de base. La reconstruction de la distribution des températures de luminance est alors possible après une demi-rotation (une rotation complète n'est pas nécessaire du fait de la symétrie hermitienne de la fonction de visibilité).

Bien sûr, afin d'éviter toute distorsion de repliement, l'échantillonnage composite du plan u-v doit satisfaire au critère de Nyquist critère, même si ceci n'est pas le cas pour les vues instantanées individuelles. Ceci s'obtient en s'assurant que le réseau de lignes de base correspondant à chaque vue instantanée ne contient pas d' "écarts radiaux" plus importants que la limite de Nyquist exprimée par l'équation [4].

Jusqu'à présent, seul a été considéré le cas d'un rayonnement incident strictement monochromatique. En réalité, les éléments récepteurs présentent une bande passante limitée et une sélectivité de fréquence à l'intérieur de cette bande passante est une propriété hautement souhaitable. On peut obtenir cette sélectivité de fréquence en mesurant des corrélations croisées entre éléments récepteurs pour un certain nombre de décalages temporels $\tau$.

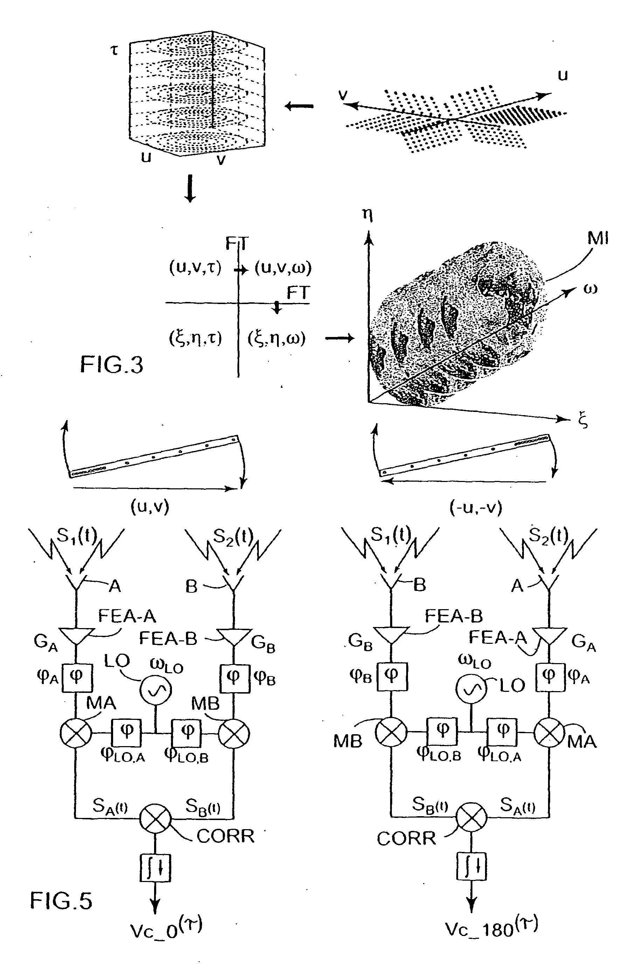

Comme représenté sur la figure 3, les vues instantanées de corrélation croisée ISV, correspondant à différentes positions angulaires du réseau et à différents décalages temporels $\tau$, remplissent un espace d'échantillonnage tridimensionnel u-v-$\tau$ avec un réseau tridimensionnel de points d'échantillonnage TDS de forme cylindrique.

La sélectivité de fréquence s'obtient par une transformée de Fourier (FT sur la figure 3) par rapport à $\tau$ des mesures de corrélation croisée, de la même manière que la Transformée de Fourier bidimensionnelle par rapport à u et v détermine la résolution spatiale. Par conséquent, les échantillons de la fonction de visibilité sont convertis en des images multispectrales de haute résolution MI du disque terrestre.

La résolution de fréquences n'est généralement pas suffisante: de nombreuses applications nécessitent aussi de pouvoir discriminer entre les composantes de polarisation verticale et horizontale (par rapport à la surfe du sol) du rayonnement reçu. L'expérience montre que la distribution de températures de luminance peut être très différente pour ces deux composantes de polarisation.

Dans le cas d'instruments non rotatifs, une mesure indépendante de deux composantes de polarisation orthogonale est relativement aisée. Dans le cas de la présente invention, toutefois, la rotation du réseau d'éléments récepteurs introduit une complication : la rotation de polarisation de chaque antenne s'effectue en même temps que celle de l'interféromètre et on obtient une combinaison de polarisations X et Y. Ce problème peut être résolu en utilisant des antennes présentant un ensemble commun d'axes de polarisation orthogonales et par corrélation croisée des signaux polarisés orthogonalement correspondants pour déterminer les paramètres de Stokes. Il est avantageux d'utiliser comme axes de polarisation les directions fixes par rapport à l'antenne XA et YA ; les paramètres de Stokes sont alors obtenus comme suit :

$$I_A = \left\langle E_{XA} E_{XA}^{\bullet} \right\rangle + \left\langle E_{YA} E_{YA}^{\bullet} \right\rangle$$
$$Q_A = \left\langle E_{XA} E_{XA}^{\bullet} \right\rangle - \left\langle E_{YA} E_{YA}^{\bullet} \right\rangle$$
$$U_A = \left\langle E_{XA} E_{YA}^{\bullet} \right\rangle + \left\langle E_{XA}^{\bullet} E_{YA} \right\rangle \qquad [5]$$
$$V_A = j\left\langle E_{XA} E_{YA}^{\bullet} \right\rangle - j\left\langle E_{XA}^{\bullet} E_{YA} \right\rangle$$

où j est l'unité imaginaire et $E_{XA,YA}$ sont les composantes du champ électrique suivant les polarisations XA et YA respectivement.

La conversion dans le système de référence x,y fixe par rapport au satellite est alors un simple changement de coordonnées :

$$I_S = I_A$$
$$Q_S = Q_A \cos 2\phi - U_A \sin 2\phi$$
$$U_S = -Q_A \sin 2\phi + U_A \cos 2\phi \qquad [6]$$
$$V_S = V_A$$

Un autre changement de coordonnées permet d'obtenir les composantes de polarisation verticale et horizontale requises.

On notera que des considérations physiques laissent supposer que, pour l'observation de la Terre $V_s = V_A \approx 0$, étant donné que la diffusion dans l'atmosphère ou sur la surface terrestre ne génère que des ondes non polarisées ou polarisées linéairement. Par conséquent $\langle E_{XA} E_{YA}^* \rangle \approx \langle E_{XA}^* E_{YA} \rangle$ et le calcul d'un seul d'entre eux suffit.

Comme décrit plus haut, et à l'inverse du cas d'un radiomètre interférométrique stationnaire, dans l'instrument conforme à l'invention le nombre d'éléments récepteurs (et par conséquent celui des corrélateurs croisés dans les premiers moyens de traitement du signal) n'est pas déterminée de façon univoque par la combinaison des exigences de résolution spatiale et du critère d'échantillonnage de Nyquist. Dans la pratique, la sensibilité et le temps de rafraîchissement d'image déterminent le nombre minimal acceptable d'éléments récepteurs pour un instrument conforme à l'invention.

La sensibilité est exprimée en termes de résolution thermique de mesure (NeΔT or NeDT), quantifiant la plus petite différence de température de luminance pouvant être mesurée, et est usuellement définie comme étant l'écart-type de 100 estimations consécutives de la température de luminance pour une scène fixe, par exemple 300 K. On peut démontrer que la sensibilité augmente (et que, par conséquent, NeΔT diminue) en cas d'augmentation du nombre d'éléments récepteurs (et, par conséquent, de corrélateurs) et d'augmentation du temps de rafraîchissement d'image, ce qui définit le temps d'intégration maximal. On a démontré, dans le cas d'une fonction de pondération Gaussienne, que la distribution optimale du temps d'intégration $\tau_{int}$ dans le plan u-v est proportionnelle à la fonction de pondération,

à savoir $\tau_{int}(\rho) = \tau_0 e^{-\rho^2/\rho_0^2}$ avec $\tau_0 = 2N_{corr}\tau_{image}\dfrac{\Delta u \Delta v}{\pi \rho_0^2}$

Avec cette distribution,

$$Ne\Delta T(\theta) \approx \frac{4\pi}{G(\theta)}\frac{T_{sys}\pi\rho_0^2}{\eta_c\sqrt{2N_{corr}B\tau_{image}}} \qquad [7]$$

où :

G(θ) est le gain de l'élément récepteur, supposé indépendant de φ et identique pour toutes les paires d'éléments;
$T_{sys}$ est la température de bruit du système;
$N_{corr}$ est le nombre de corrélateurs (c'est-à-dire le nombre de paires de lignes de base pour lesquelles la fonction de visibilité est calculée);
$\eta_c$ est le rendement des corrélateurs, y compris les pertes dues à la conversion analogique-numérique;
B est la bande passante de mesure du signal complexe;
$\tau_{image}$ est le temps de rafraîchissement d'image;

$\rho_0$ est un paramètre d'échelle de la fonction de pondération w(p), supposée de type Gaussien: $w(\rho) = e^{-\rho^2/\rho_0^2}$

et Δu, Δv sont le pas d'échantillonnage les plus grands dans le plan u-v.

L'équation [7] peut être assimilée à une fonction de pondération arbitraire et à un échantillonnage non uniforme du plan u-v.

La liberté dont dispose le concepteur de l'instrument pour déterminer le nombre d'éléments récepteurs sur la base des exigences de sensibilité et de temps de rafraîchissement est un aspect particulier de la présente invention: comme indiqué plus haut, dans le cas d'un instrument non rotatif, ce nombre est déterminé de façon univoque par les exigences de résolution spatiale et d'échantillonnage.

On peut maintenant quantifier la réduction du nombre d'éléments récepteurs pouvant être obtenue grâce à l'invention. Les connaissances actuelles dans le domaine météorologique suggèrent qu'un besoin minimal est une résolution de 200 km (environ 7 mrad) avec un temps de rafraîchissement d'image de 12 h et un NeΔT de 1,5K à 53 GHz. Des exigences conduisant à des résultats plus satisfaisants sont une résolution de 30 km (environ 1 mrad), un temps de rafraîchissement d'image de 30 minutes et un NeΔT de 0,5K. Ces exigences sont satisfaites par un radiomètre interférométrique rotatif comprenant 140 éléments, à comparer aux 630 éléments qui seraient nécessaires en cas d'utilisation d'un instrument non rotatif, soit une réduction d'environ 77%.

Cette réduction drastique de la complexité du radiomètre, et par conséquent de sa masse, rend possible la réalisation d'un instrument multibande, fonctionnant dans plusieurs bandes de fréquences dans le domaine spectral 30-400 GHz (cette plage est donnée à titre d'illustration et n'est en aucun cas limitative). Un instrument multibande est simplement constitué par une pluralité de radiomètres individuels conformes à l'invention, montés sur une structure rotative commune.

En particulier, pour une application météorologique on peut vouloir prendre des images dans plusieurs bandes séparées : 50 - 56 GHz (soit, pour plus de simplicité, "bande 53 GHz"), 118,45 - 123,25 GHz ("118 GHz") 166 - 188,31 GHz ("183 GHz") et 346 - 380,20 GHz ("380 GHz"), etc. Des mesures dans la bande 53 GHz et 183 GHz permettent de déterminer la température et la concentration en vapeur d'eau, ces mesures étant celles de plus haute priorité; des mesures à 118 GHz offriraient en plus la possibilité de discriminer entre les nuages et une précipitation tandis que des mesures à 380 GHz permettraient une meilleure couverture de la concentration en vapeur d'eau à haute altitude et une discrimination entre précipitation et nuages cirrus.

Le tableau suivant donne le nombre d'éléments récepteurs dans un exemple de mode de réalisation d'un radiomètre à quatre bandes conforme à l'invention, et une comparaison avec le nombre d'éléments qui seraient nécessaires dans le cas d'un radiomètre non rotatif avec des performances similaires :

| Bande | Réseau Y rotatif | | Réseau Y stationnaire |
|---|---|---|---|
| | Nombre d'éléments | NeΔT à 30 minutes | Nombre d'éléments |
| 53 GHz | 136 | 0,5 K | 630 |
| 118 GHz | 107 | 1,0 K | 630 |
| 183 GHz | 107 | 1,1K | 630 |
| 380 GHz | 107 | 2,6 K | 630 |
| Nombre total d'éléments | 457 | | 2520 |

On peut noter que le nombre d'éléments récepteurs requis pour le radiomètre à quatre bandes conforme à l'exemple de mode de réalisation de la présente invention est inférieur à celui qui serait nécessaire pour un radiomètre non rotatif travaillant dans une bande unique. Le nombre d'éléments pourrait être réduit encore plus avant en posant des exigences de sensibilité moins sévères.

La Figure 4A est une vue depuis le nadir de l'ensemble rotatif d'un radiomètre interférométrique multibande conforme à un mode de réalisation de l'invention. L'instrument comprend une structure de support en Y STR constituée par trois bras A1, A2 et A3 s'étendant dans une direction radiale et espacés angulairement de 120°. On peut faire tourner la structure de support autour d'un axe traversant son centre, ladite structure portant quatre réseaux REA d'éléments récepteurs, chacun étant adapté pour recevoir un rayonnement dans une bande différente : REA-53 fonctionne dans la bande "53 GHz", REA-118 dans la bande "118 GHz", REA-183 dans la bande "183 GHz" et REA-380 dans la bande "380 GHz".

Plus précisément, chaque réseau d'éléments récepteurs comprend trois sous-réseaux linéaires s'étendant le long des bras de la structure de support STR. Les sous-réseaux linéaires de différents radiomètres interférométriques individuels qui s'étendent le long du même bras de la structure de support sont mutuellement parallèles.

On observera que seul le réseau d'éléments récepteurs de plus basse fréquence s'étend sur toute la longueur des bras, et que la longueur des réseaux diminue au fur et à mesure que la fréquence augmente: ceci tient au fait que la longueur de ligne de base requise pour obtenir une même résolution spatiale est proportionnelle à la longueur d'onde du rayonnement, ainsi que le montre l'équation 1.

La Figure 4B est une vue à plus grande échelle de la partie centrale de la figure 4A, et permet d'apprécier l'agencement des éléments récepteurs individuels au sein de chaque réseau linéaire. Tout d'abord, on notera que la distance entre éléments n'est pas constante ; une tendance générale montre que l'espacement entre éléments est plus faible vers le centre de l'interféromètre, et que leur densité est réduite vers l'extrémité extérieure. Les agencements des éléments récepteurs sur les bras A1, A2 et A3 sont identiques, à l'exception du fait que le réseau 53 GHz sur le bras A3 est excentré d'environ 0,4 m de manière à faire de la place pour le réseau 380 GHz. Les éléments situés le plus vers l'extérieur sur ce bras sont donc retirés de telle manière que les longueurs physiques de tous les bras soient égales.

La partie extérieure des bras présente un motif répétitif d'espacements inter-éléments, par exemple 12λ-19λ à 53 GHz, jusqu'à l'extrémité du réseau.

Il apparaît, au vu de la Figure 4B, que l'opération multibande n'est possible que parce que l'invention rend non nécessaire un agencement compact des éléments récepteurs ; sinon, le réseau correspondant à une opération monobande occuperait la totalité da la partie centrale de l'instrument, ce qui ne laisserait plus de place pour les autres réseaux.

La détermination de l'agencement exact des éléments récepteurs du radiomètre interférométrique est une question d'optimisation et dépend des objectifs de performance considérés. Plusieurs considérations doivent être prises en compte :

Tout d'abord, comme décrit plus haut, la résolution spatiale requise détermine la longueur de ligne de base maximale, et le critère de Nyquist détermine la densité d'échantillons requise dans le plan u-v (après rotation de l'interféromètre).

Le nombre total de récepteurs est déterminé par la sensibilité requise. Il est souvent nécessaire de trouver un compromis entre la complexité de l'instrument, sa sensibilité et sa résolution temporelle : afin d'augmenter la sensibilité il est nécessaire d'augmenter le temps d'intégration, et par conséquent de dégrader la résolution temporelle, ou d'augmenter le nombre d'éléments récepteurs, ou les deux.

Grâce à l'utilisation d'un échantillonnage par rotation, il n'est pas nécessaire de monter les éléments récepteurs bord à bord. Ceci permet au concepteur de l'instrument d'adapter la répartition de densité des longueurs de ligne de base $\rho=\sqrt{u^2+v^2}$ de manière à améliorer les performances. Dans l'art antérieur, l'utilisation d'un espacement inter-élément constant conduit à une répartition de la densité des longueurs de lignes de base qui est presque uniforme, jusqu'à une valeur maximale $\rho_{max}$, où la densité tombe à zéro. Ceci correspond à la synthèse d'une ouverture "dure", ou fente, qui est intrinsèquement affectée par des lobes secondaires de diffraction prononcés, qui doivent être supprimés par un traitement du signal approprié.

A l'inverse, dans le cas d'un mode avantageux de réalisation de l'invention, les éléments récepteurs ne sont pas équidistants, pas plus que leurs distances relatives ne sont exprimées par des multiples entiers d'une ligne de base minimale. Ceci permet d'obtenir une répartition de la densité des longueurs de ligne de base qui décroît graduellement vers zéro, réduisant ou supprimant ainsi les lobes secondaires. Une distribution gaussienne est souvent considérée comme un optimum, mais d'autres fonctions d'apodisation adéquates, telles qu'une fonction cosinusoïdale, de Hamming, de Hanning, etc. peuvent être utilisées. Dans la pratique, toutefois, la fonction d'apodisation souhaitée ne peut être qu'approximée.

Une définition soignée de l'agencement des éléments récepteurs peut conduire à une amplitude relative des lobes secondaires n'excédant pas -20 dB, et de préférence -40 dB. Idéalement, la distribution des lignes de base doit être adaptée à la fonction de pondération w(p) utilisée pour la récupération de la distribution des températures de luminance (équation [3]).

Comme décrit plus bas, pour le calibrage, il est avantageux d'utiliser une configuration d'éléments presque identique sur les trois bras.

Le calibrage constitue une étape très importante en imagerie par interférométrie, étant donné que les éléments récepteurs présentent des dérives d'amplitude et, plus important encore, des dérives de phase susceptibles de rendre la récupération de la distribution des températures de luminance rapidement impossible si elles ne sont pas corrigées. Les inventeurs ont déterminé que la rotation du réseau d'éléments récepteurs peut contribuer à calibrer l'instrument. De fait, étant donné que le réseau tourne perpendiculairement au plan u-v qui est balayé, la même ligne de base apparaît avec un signe inversé à chaque demi-rotation. A une vitesse de rotation de l'ordre de 1 tr/min, la scène observée peut être considérée comme étant constante et par conséquent l'inversion des lignes de base transforme la fonction de visibilité en son complexe conjugué. En d'autres termes, si $\psi$ est l'angle de rotation du réseau, V(u,v; $\psi\pm180°$)=V(-u,-v; $\psi$)= V*(u,v; $\psi$). Ainsi qu'on le verra plus loin, ceci peut être utilisé pour le calibrage de phase et de décalage temporel des éléments récepteurs. En outre, dans le cas particulier d'un réseau en Y comportant des bras identiques, une rotation de 120° maintient la configuration interférométrique inchangée, soit V(u,v; $\psi\pm120°$)=V(u, v; $\psi$), et ceci est également utile pour le calibrage. Par combinaison des relations indiquées plus haut, on obtient :

$$V(u,v, \psi\pm60°)= V(u,v, \psi\pm180°)= V^*(u,v; \psi)$$

$$V(u,v, \psi\pm120°)= V(u,v; \psi)$$

à savoir chaque rotation de 60° apporte des informations de calibrage utiles.

L'idée de base pour les calibrages à ligne de base inversée repose sur le fait que deux mesures effectuées depuis des réseaux de récepteurs opposés mesurent les mêmes informations avec des distorsions de phase opposées, qui peuvent alors être moyennées.

On décrit maintenant plus précisément cette technique de calibrage avec référence à la figure 5. Cette figure est un schéma fonctionnel simplifié d'un interféromètre individuel constitué par un couple d'éléments récepteurs A et B, l'électronique frontale associée comprenant des amplificateurs (FEA-A et FEA-B), des mélangeurs de fréquence intermédiaire IF (MA, MB) pour une conversion-abaissement de fréquence, associés à un oscillateur local LO, et un corrélateur CORR.

Les parties gauche et droite de la figure 5 correspondent à des orientations opposées de la ligne de base A-B, c'est-à-dire à des positions angulaires du réseau en Y séparées de 180°. Le signal reçu par l'antenne A (B, respectivement) fait l'objet d'une amplification d'un facteur $G_A e^{j\varphi A}$ ($G_B e^{j\varphi B}$), puis est mélangé avec un signal sinusoïdal généré localement, oscillant à une fréquence $\omega_{LO}$, avec un déphasage d'insertion $\varphi LO,A$ ($\varphi LO,B$).

Soient $V_{C\_0}$ et $V_{C\_180}$ les mesures de corrélation le long de la ligne de base pour les angles de rotation d'interféromètre 0° et 180° respectivement. Il s'en suit alors, conformément à la figure 5 :

$$V_{C\_0} = S_A S_B^{\bullet} = S_1 S_2^{\bullet} \cdot G_A G_B \cdot e^{j(\varphi_A - \varphi_B + \varphi_{LO,A} - \varphi_{LO,B})} \qquad [8]$$

$$V_{C\_180}^{\bullet} = S_A^{\bullet} S_B = S_1 S_2^{\bullet} \cdot G_A G_B \cdot e^{-j(\varphi_A - \varphi_B + \varphi_{LO,A} - \varphi_{LO,B})}$$

Ainsi, l'erreur combinée de phase peut être déterminée à partir de l'argument du rapport entre les mesures de corrélation pour deux orientations opposées de l'interféromètre, c'est-à-dire :

$$\frac{V_{C\_0}}{V_{C\_180}^{\bullet}} = e^{j2(\varphi_A - \varphi_B + \varphi_{LO,A} - \varphi_{LO,B})} \qquad [9]$$

L'équation [9] démontre la raison pour laquelle la rotation de l'interféromètre conduit à des ensembles d'informations redondantes.

La rotation apporte en outre des informations redondantes additionnelles qui facilitent le calibrage : on considère deux éléments (A et B) positionnés le long d'un bras du Y tournant et deux autres éléments (C et D) positionnés le long d'un autre bras. Supposons par ailleurs que la séparation entre les éléments A et B est identique à la séparation entre C et D. Alors, du fait de la symétrie discrète en rotation du réseau en Y REA, la ligne de base entre A et B sera identique à la ligne de base entre D et C après une rotation de 60° de l'interféromètre, soit :

$$V_{C\_0} = S_1 S_2^{\bullet} \cdot G_A G_B \cdot e^{j(\varphi_A - \varphi_B + \varphi_{LO,A} - \varphi_{LO,B})} \qquad [10]$$

$$V_{C\_60}^{\bullet} = S_1 S_2^{\bullet} \cdot G_D G_C \cdot e^{j(\varphi_D - \varphi_C + \varphi_{LO,D} - \varphi_{LO,C})}$$

Le rapport entre ces deux observations dans l'équation [10] fournit une observation indépendante de la scène des erreurs combinées de gain et de phase pour les récepteurs prenant part aux deux mesures. Des rapports similaires peuvent être déterminés pour toutes les combinaisons d'éléments avec des séparations entre éléments communes le long des bras et les équations peuvent être formulées pour chaque rotation d'un multiple entier de 60°, c'est-à-dire :

$$\frac{V_{C\_0}}{V_{C\_n*60}^{\bullet}} = \frac{G_A G_B}{G_C G_D} e^{j(\varphi_A - \varphi_B + \varphi_C - \varphi_D + \varphi_{LO,A} - \varphi_{LO,B} + \varphi_{LO,C} - \varphi_{LO,D})} \qquad [11]$$

où $V_{C\_n*60}$ indique que les équations peuvent être formulées pour chaque rotation d'un multiple entier de 60°.

On notera que l'équation [9] est un cas particulier de l'équation [11], c'est-à-dire qu'après une rotation de 180° $G_A = G_C$, $\varphi_B = \varphi_D$ etc. Ainsi, l'équation [11] décrit l'ensemble complet d'informations redondantes qui est ajouté du fait de la rotation.

L'agencement des éléments de l'interféromètre comporte également des lignes de base instantanément redondantes pour lesquelles des rapports similaires à l'équation [11] peuvent être déterminés sans rotation.

L'équation [11] ne peut pas être résolue indépendamment pour un ensemble unique de récepteurs, mais lorsque toutes les équations similaires à [11] sont combinées, une solution matricielle bien conditionnée permettant de déterminer les erreurs relatives de gain et de phase pour chaque récepteur individuel peut être établie. Cette solution bénéficie des redondances résultant à la fois de la rotation et des redondances disponibles instantanément.

La description donnée ci-dessus est une description générale qui démontre de quelle manière des redondances additionnelles apparaissent du fait de la rotation. Ces redondances contribuent à la solution matricielle des coefficients de calibrage d'amplitude et de phase relatifs. La formulation de cette solution peut être basée sur l'art antérieur, par exemple la calibration spatiale avec redondance décrite dans la thèse de doctorat de A. J. Camps Carmona « Application of Interferometric Radiometry to Earth Observation », Universitat Politècnica de Catalunya, Barcelone, Espagne, 1996.

Les calibrages de phase et d'amplitude relatifs peuvent être effectués séparément dans chaque canal de résolution de manière à récupérer les variations qui sont fonction de la fréquence. Ces calibrages doivent être complétés par un calibrage radiométrique absolu.

Le calibrage radiométrique absolu peut être fourni par un système séparé procurant un calibrage absolu pour une partie connue de l'image observée. L'image récupérée par le radiomètre interférométrique peut alors être calibrée par mise à l'échelle de l'image interférométrique de telle manière que l'intensité sur la partie communément observée de l'image soit alignée pour deux systèmes d'observation.

On notera que le fait que, selon les modes de réalisation des figures 4A et 4B, les trois bras ne soient pas rigoureusement identiques n'est pas préjudiciable au calibrage. Les configurations des lignes de base le long des trios bras sont très similaires et un nombre important d'équations similaires à [11] qui comprennent tous les éléments peuvent être formulées.

L'invention a été décrite avec référence à quelques exemples de modes de réalisation. Toutefois, l'homme de l'art comprendra qu'un certain nombre de modifications peuvent être apportées sans s'écarter pour autant du cadre de la présente invention.

La forme en Y du réseau est souvent considérée comme étant optimale pour l'imagerie par interférométrie, mais celle-ci n'est pas exclusive. D'autres formes, par exemple en T , L, V, ou circulaire sont également bien adaptées pour mettre en oeuvre l'invention.

Le réseau peut comprendre des bras non linéaires, par exemple courbes.

En outre, il n'est pas nécessaire que le réseau d'éléments récepteurs soit, au sens strict, bidimensionnel : les éléments récepteurs ne doivent pas nécessairement être situés dans le même plan, pour autant qu'une correction de phase soit prévue pour prendre en compte les différences de parcours introduites par une configuration tridimensionnelle. De ce fait, le réseau REA peut être défini de manière plus large comme étant « bi- ou tri-dimensionnel ».

En outre, il n'est pas nécessaire que tous les éléments récepteurs soient alignés le long de bras linéaires : au contraire, quelques éléments non alignés peuvent avoir un effet bénéfique. En particulier, une configuration triangulaire des éléments, avec des lignes de base communes sur chaque bras, constitue un mode de réalisation avantageux, étant donné que ceci renforce la redondance instantanée entre les bras.

D'un point de vue strictement interférométrique, il n'est pas nécessaire de faire tourner le réseau d'éléments récepteurs autour de son centre. Toutefois, dans la pratique, il est avantageux d'équilibrer les masses et les moments autour de l'axe, en faisant passer ce dernier par le centre d'inertie du réseau, de manière à obtenir un instrument stable.

Dans l'ensemble de la description qui précède, on a supposé implicitement que les antennes de tous les éléments récepteurs travaillant dans la même bande de fréquences étaient de même diamètre. Ceci n'est pas nécessaire : étant donné que la rotation du réseau rend une configuration compacte non nécessaire, des éléments récepteurs de taille différente peuvent coexister dans le réseau. En particulier, on peut utiliser des antennes plus grandes en partie extérieure du réseau qu'en partie intérieure, où la convergence des bras induit des contraintes d'encombrement.

L'utilisation de corrélations croisées différées et de transformées de Fourier par rapport au décalage temporel de manière à obtenir la sélectivité spectrale visée est avantageuse par rapport aux systèmes avec des filtres analogiques de sélectivité en amont des corrélateurs, pour lesquels des filtres non adaptés et non étalonnés introduiraient des distorsions dans les mesures de température de luminance. Toutefois la technique utilisant une transformée de Fourier exige plus de puissance que le filtrage analogique ; par conséquent, dans certaines applications, on peut préférer cette dernière technique ou une combinaison des deux techniques.

Enfin, il n'est pas nécessaire que tous les moyens de traitement du signal pour la récupération d'image soient embarqués sur le satellite, comme suggéré par la figure 2. Une variante de mode de réalisation peut, par exemple, prévoir d'embarquer sur le satellite uniquement les premiers moyens de traitement du signal et les moyens de calibrage et transmettre les échantillons de visibilité $V(u,v,\tau)$ au sol pour un traitement ultérieur.

**Revendications**

1. Radiomètre interférométrique destiné à l'imagerie d'une émission de rayonnement d'une scène cible (ED), comprenant:

   - une pluralité d'éléments récepteurs (201, 202) pour recevoir ledit rayonnement, lesdits éléments récepteurs (201, 202) étant agencés sous forme d'un réseau bidimensionnel ou tridimensionnel (REA) ;
   - des premiers moyens de traitement du signal (SP1) pour calculer un ensemble bidimensionnel d'échantillons d'une fonction de visibilité (V) de ladite émission de rayonnement par corrélation croisée par paire des signaux reçus par lesdits éléments récepteurs (201, 202) ; et
   - des seconds moyens de traitement du signal (SP2) pour reconstruire une image de l'intensité (MI) de ladite émission de rayonnement à partir desdits échantillons de ladite fonction de visibilité (V) ;

**caractérisé en ce qu'**il comprend en outre des moyens (ROT) de rotation dudit réseau bidimensionnel ou tridimensionnel d'éléments récepteurs (REA) autour d'un axe de rotation (z) qui est sensiblement dirigé vers ladite scène cible (ED) ;

et **en ce que** lesdits seconds moyens de traitement du signal (SP2) sont adaptés pour reconstruire ladite image de l'intensité (MI) à partir d'une pluralité d'ensembles bidimensionnels d'échantillons de ladite fonction de visibilité (V), chacun desdits ensembles d'échantillons correspondant à une position angulaire différente dudit réseau bidimensionnel ou tridimensionnel rotatif (REA) d'éléments récepteurs.

2. Radiomètre interférométrique embarqué sur un véhicule spatial selon la revendication 1, adapté pour l'imagerie d'une surface planétaire (ED).

3. Radiomètre interférométrique selon la revendication 1 ou 2, dans lequel ledit réseau d'éléments récepteurs (REA) est sensiblement bidimensionnel et perpendiculaire audit axe de rotation (z).

4. Radiomètre interférométrique selon l'une quelconque des revendications précédentes, dans lequel les espacements entre lesdits éléments récepteurs (201, 202) sont ni constants, ni des multiples entiers d'un espacement minimal.

5. Radiomètre interférométrique selon la revendication 4, dans lequel l'agencement desdits éléments récepteurs (201, 202) est choisi de telle manière à définir une distribution non uniforme desdits échantillons de ladite fonction de visibilité (V) dans un domaine bidimensionnel de fréquences spatiales, en assurant que les lobes secondaires d'un diagramme de réception synthétisé dudit radiomètre interférométrique présentent une amplitude normalisée inférieure ou égale à -20 dB, et de préférence inférieure ou égale à -40 dB.

6. Radiomètre interférométrique selon la revendication 4 ou 5, dans lequel l'agencement desdits éléments récepteurs (201, 202) est tel que la distribution desdits échantillons de ladite fonction de visibilité (V) dans un domaine bidimensionnel de fréquences spatiales peut être approchée par une fonction d'apodisation, telle qu'une fonction Gaussienne, une fonction cosinusoïdale, une fenêtre de Hamming, et une fenêtre de Hanning.

7. Radiomètre interférométrique selon l'une quelconque des revendications précédentes, dans lequel lesdits moyens (ROT) de rotation dudit réseau bidimensionnel ou tridimensionnel (REA) sont adaptés pour opérer à une vitesse de rotation comprise entre 0,001 et 100 tr/min, de préférence entre 0,01 et 10 tr/min, et de manière encore plus avantageuse entre 0,1 et 1 tr/miri.

8. Radiomètre interférométrique selon l'une quelconque des revendications précédentes, dans lequel lesdits éléments récepteurs (201, 202) sont adaptés pour recevoir un rayonnement électromagnétique dans au moins une bande de fréquences comprise dans le domaine spectral 1 GHz - 1 THz.

9. Radiomètre interférométrique selon la revendication 8, dans lequel lesdits éléments récepteurs (201, 202) sont adaptés pour recevoir un rayonnement électromagnétique dans au moins une bande de fréquences comprise dans le domaine spectral 30 GHz - 400 GHz.

10. Radiomètre interférométrique selon la revendication 8 ou 9, dans lequel la largeur dudit réseau bidimensionnel ou tridimensionnel (REA) d'éléments récepteurs perpendiculairement audit axe de rotation (z) est suffisante pour procurer une résolution angulaire de l'image d'intensité reconstruite inférieure ou égale à 7 milliradians, et de préférence inférieure ou égale à 1 milliradian, au moins dans ladite bande de fréquences.

11. Radiomètre interférométrique selon l'une quelconque des revendications précédentes, dans lequel le nombre et l'agencement desdits éléments récepteurs (201, 202) sont tels que, après une demi-rotation du réseau bidimensionnel ou tridimensionnel rotatif (REA), la densité d'échantillonnage résultante pour ladite fonction de visibilité (V) est suffisante pour procurer un champ de vision non ambigu présentant une largeur supérieure ou égale à 17°, au moins dans ladite bande de fréquences.

12. Radiomètre interférométrique selon l'une quelconque des revendications précédentes, dans lequel ledit axe de rotation (z) traverse sensiblement le centre d'inertie duit réseau bidimensionnel ou tridimensionnel d'éléments récepteurs (REA).

13. Radiomètre interférométrique selon l'une quelconque des revendications précédentes, dans lequel lesdits éléments récepteurs (201, 202) sont alignés le long d'une pluralité de bras linéaires (A1, A2, A3).

**14.** Radiomètre interférométrique selon la revendication 13, dans lequel lesdits éléments récepteurs (201, 202) sont alignés le long de trois bras linéaires (A1, A2, A3) espacés angulairement de 120° les uns par rapport aux autres de manière à former un réseau en Y (REA), ledit axe de rotation (z) traversant le centre dudit réseau.

**15.** Radiomètre interférométrique selon la revendication 13 ou 14, dans lequel le nombre et l'espacement des éléments récepteurs (201, 202) sont identiques sur lesdits bras linéaires (A1, A2, A3).

**16.** Radiomètre interférométrique selon l'une quelconque des revendications précédentes, dans lequel lesdits premiers moyens de traitement du signal (SP1) sont adaptés pour introduire une pluralité de décalages temporels relatifs ($\tau$) entre lesdits signaux reçus devant faire l'objet d'une corrélation croisée et pour calculer des fonctions de visibilité (V) en fonction du décalage temporel, et lesdits seconds moyens de traitement du signal (SP2) sont adaptés pour reconstruire une image multibande (MI) de ladite émission de rayonnement en effectuant la transformée de Fourier desdites fonctions de visibilité en fonction du décalage temporel.

**17.** Radiomètre interférométrique selon l'une quelconque des revendications précédentes, comprenant en outre des moyens (CM) de calibrage de phase relatif, dans lequel lesdits moyens de calibrage (CM) sont adaptés pour comparer les ensembles d'échantillons de ladite fonction de visibilité (V) correspondant à différentes positions angulaires dudit réseau d'éléments récepteurs rotatif (REA), et récupérer les informations de calibrage de phase relative résultant de ladite comparaison.

**18.** Radiomètre interférométrique selon l'une quelconque des revendications précédentes, comprenant en outre des moyens (CM) de calibrage d'amplitude relative, dans lequel lesdits moyens de calibrage (CM) sont adaptés pour comparer les ensembles d'échantillons de ladite fonction de visibilité (V) correspondant à différentes positions angulaires dudit réseau d'éléments récepteurs rotatif (REA), et récupérer les informations de calibrage d'amplitude relative résultant de ladite comparaison.

**19.** Radiomètre interférométrique.selon la revendication 17 ou 18, dans lequel lesdits moyens de calibrage (CM) sont adaptés pour comparer les ensembles d'échantillons de ladite fonction de visibilité (V) correspondant à différentes positions angulaires dudit réseau d'éléments récepteurs rotatif (REA) décalées d'une demi-rotation.

**20.** Radiomètre interférométrique selon l'une quelconque des revendications 17 à 19, dans lequel ledit réseau d'éléments récepteurs rotatif (REA) présente, au moins approximativement, une symétrie discrète en rotation, et dans lequel lesdits moyens de calibrage (CM) sont adaptés pour comparer les ensembles d'échantillons de ladite fonction de visibilité (V) correspondant à différentes positions angulaires dudit réseau d'éléments récepteurs rotatif (REA) décalés d'un angle correspondant à ladite symétrie discrète en rotation.

**21.** Radiomètre interférométrique selon l'une quelconque des revendications précédentes, dans lequel les éléments récepteurs (201, 202) sont adaptés pour distinguer entre deux composantes de polarisation le rayonnement reçu, et dans lequel lesdits seconds moyens de traitement du signal (SP2) sont adaptés pour reconstruire deux images d'intensité correspondant à différentes composantes de polarisation pour ladite émission de rayonnement.

**22.** Radiomètre interférométrique selon la revendication 21, dans lequel lesdits second moyens de traitement du signal (SP2) sont adaptés pour calculer les paramètres de Stokes du rayonnement reçu.

**23.** Radiomètre interférométrique multibande comprenant une pluralité de radiomètres interférométriques individuels conformes à l'une quelconque des revendications précédentes, dont les réseaux bidimensionnels ou tridimensionnel d'éléments récepteurs correspondants (REA-53, REA-118, REA-183, REA-380) sont montés sur une structure rotative commune (STR), chacun desdits radiomètres interférométriques individuels étant adapté pour fonctionner dans une bande spectrale différente.

**24.** Radiomètre interférométrique multibande selon la revendication 23, comprenant une pluralité de radiomètres interférométriques dans lesquels lesdits éléments récepteurs (201, 202) sont alignés le long d'une pluralité de bras linéaires (A1, A2, A3), les bras linéaires correspondants (A1, A2, A3) desdits radiomètres interférométriques individuels étant mutuellement parallèles.

**Claims**

1. An interferometric radiometer for imaging a target scene (ED), comprising:

   - a plurality of receiving elements (201, 202) for receiving said radiation, said receiving elements (201, 202) being arranged in a two-or three-dimensional array (REA);
   - first signal processing means (SP1) for computing a two-dimensional set of samples of a visibility function (V) of said radiation emission by pair-wise cross-correlating signals received by said receiving elements (201, 202); and
   - second signal processing means (SP2) for reconstructing an intensity image (MI) of said radiation emission from said samples of said visibility function (V);

   **characterized in that** it further comprises means (ROT) for rotating said two- or three-dimensional array of receiving elements (REA) about a rotation axis (z) which is substantially directed toward said target scene (ED) ; and **in that** said second signal processing means (SP2) are adapted for reconstructing said intensity image (MI) from a plurality of two-dimensional sets of samples of said visibility function (V), each of said set of samples corresponding to a different rotational position of said rotating two- or three-dimensional array (REA) of receiving elements.

2. A space-borne interferometric radiometer according to claim 1, adapted for imaging a planetary surface (ED).

3. An interferometric radiometer according to claim 1 or 2, wherein said array of receiving elements (REA) is substantially bi-dimensional and perpendicular to said rotation axis (z).

4. An interferometric radiometer according to any of the preceding claims, wherein the spacings between said receiving elements (201, 202) are not constant, nor are integer multiples of a minimum spacing.

5. An interferometric radiometer according to claim 4, wherein the arrangement of said receiving elements (201, 202) is chosen such as to determine a non-uniform distribution of said samples of said visibility function (V) in a two-dimensional spatial frequency domain, ensuring that the secondary lobes of a synthesized receiving pattern of said interferometric radiometer have a normalized amplitude of -20 dB or less, and preferably of -40 dB or less.

6. An interferometric radiometer according to claim 4 or 5, wherein the arrangement of said receiving elements (201, 202) is such that the distribution of said samples of said visibility function (V) in a two-dimensional spatial frequency domain approaches an apodization function chosen between a Gaussian function, a cosine, a Hamming window and a Hanning window.

7. An interferometric radiometer according to any of the preceding claims, wherein said means (ROT) for rotating said two or three-dimensional array (REA) are adapted for operating at a rotational speed comprised between 0.001 and 100 rpm, preferably between 0.01 and 10 rpm and even more preferably between 0.1 and 1 rpm.

8. An interferometric radiometer according to any of the preceding claims, wherein said receiving elements (201, 202) are adapted for receiving electromagnetic radiation in at least a frequency band lying in the 1GHz - 1THz spectral range.

9. An interferometric radiometer according to claim 8, wherein said receiving elements (201, 202) are adapted for receiving electromagnetic radiation in at least a frequency band lying in the 30 GHz - 400 GHz spectral range.

10. An interferometric radiometer according to claim 8 or 9, wherein the width of said two- or three-dimensional array (REA) of receiving elements perpendicularly to said rotation axis (z) is sufficient for providing an angular resolution of the reconstructed intensity image of 7 milliradians or less, and preferably of 1 milliradian or less, at least in said frequency band.

11. An interferometric radiometer according to any of the preceding claims, wherein the number and the arrangement of said receiving elements (201, 202) are such that, after half a turn of the rotating two- or three-dimensional array (REA), the resulting sampling density of said visibility function (V) is sufficient for providing an unambiguous field of view having a full width of 17° or more, at least in said frequency band.

12. An interferometric radiometer according to any of the preceding claims, wherein said rotation axis (z) passes substantially through the center of inertia of said rotating two- or three-dimensional array of receiving elements (REA).

13. An interferometric radiometer according to any of the preceding claims, wherein said receiving elements (201, 202) are aligned along a plurality of linear arms (A1, A2, A3).

14. An interferometric radiometer according to claim 13, wherein said receiving elements (201, 202) are aligned along three linear arms (A1, A2, A3) angularly spaced by 120° with respect to each other so as to form a Y-shaped array (REA), said rotation axis (z) passing through the center of said array.

15. An interferometric radiometer according to claim 13 or 14, wherein the number and the spacing of the receiving elements (201, 202) on said linear arms (A1, A2, A3) are the same.

16. An interferometric radiometer according to any of the preceding claims, wherein said first signal processing means (SP1) are adapted for introducing a plurality of relative time delays ($\tau$) between said received signals to be cross-correlated and for computing delay-dependent visibility functions (V), and said second signal processing means (SP2) are adapted for reconstructing a multi-spectral image (MI) of said radiation emission by Fourier-transforming said delay-dependent visibility functions.

17. An interferometric radiometer according to any of the preceding claims, further comprising relative phase calibration means (CM), wherein said calibration means (CM) are adapted for comparing the sets of samples of said visibility function (V) corresponding to different rotational positions of said rotating array of receiving elements (REA) and retrieving relative phase calibration information by said comparison.

18. An interferometric radiometer according to any of the preceding claims, further comprising relative amplitude calibration means (CM), wherein said calibration means (CM) are adapted for comparing the sets of samples of said visibility function (V) corresponding to different rotational positions of said rotating array of receiving elements (REA) and retrieving relative amplitude calibration information by said comparison.

19. An interferometric radiometer according to claim 17 or 18, wherein said calibration means (CM) are adapted for comparing the sets of samples of said visibility function (V) corresponding to rotational positions of said rotating array of receiving elements (REA) differing by half a turn.

20. An interferometric radiometer according to any of claims 17 to 19, wherein said rotating array of receiving elements (REA) has, at least approximately, a discrete rotational symmetry, and wherein said calibration means (CM) are adapted for comparing the sets of samples of said visibility function (V) corresponding to rotational positions of said rotating array of receiving elements (REA) differing by an angle corresponding to said discrete rotational symmetry.

21. An interferometric radiometer according to any of the preceding claims, wherein the receiving elements (201, 202) are adapted for distinguishing between two polarization components of the received radiation, and wherein said second signal processing means (SP2) are adapted for reconstructing two intensity images corresponding to different polarization components of said radiation emission.

22. An interferometric radiometer according to claim 21, wherein said second signal processing means (SP2) are adapted for computing the Stokes parameters of the received radiation.

23. A multi-band interferometric radiometer comprising a plurality of individual interferometric radiometers according to any of the preceding claims, the two- or three-dimensional arrays of receiving elements of which (REA-53, REA-118, REA-183, REA-380) are mounted on a common rotating structure (STR), each of said individual interferometric radiometers being adapted to operate in a different spectral band.

24. A multi-band interferometric radiometer according to claim 23, comprising a plurality of individual interferometric radiometers according to claim 13, or to any of claims 14 to 22 when depending from claim 13, wherein the corresponding linear arms (A1, A2, A3) of said individual interferometric radiometers are parallel to each other.

**Patentansprüche**

1. Interferometer-Radiometer, das zur Bilderstellung einer Strahlungsemission von einer Ziel-Szene (ED) bestimmt ist und aufweist:

eine Vielzahl von Aufnahmeelementen (201, 202) zum Aufnehmen der Strahlung, wobei die Aufnahmeelemente (201, 202) in Form eines zweidimensionalen oder dreidimensionalen Netzes (REA) angeordnet sind,

eine erste Signalverarbeitungseinrichtung (SP1) zum Berechnen einer zweidimensionale Abtastgruppe einer Sichtbarkeitsfunktion (V) der Strahlungsemission durch Kreuzkorrelation der Paare der Signale, die durch die Aufnahmeelemente (201, 202) aufgenommen wurden, und

eine zweite Signalverarbeitungseinrichtung (SP2) zum Rekonstruieren eines Bildes mit der Intensität (MI) der Strahlungsemission von den genannten Abtastungen der Sichtbarkeitsfunktion (V) ausgehend,

**dadurch gekennzeichnet, dass** dieses ferner eine Einrichtung (ROT) zur Rotation des zweidimensionalen oder dreidimensionalen Netzes (REA) von Aufnahmeelementen um eine Rotationsachse (z) aufweist, die im Wesentlichen zur Ziel-Szene (ED) hin gerichtet ist,

und dass die zweite Signalverarbeitungseinrichtung (SP2) angepasst ist, das Bild mit der Intensität (MI) ausgehend von einer Vielzahl von zweidimensionalen Abtastgruppen der Sichtbarkeitsfunktion (V) zu rekonstruieren, wobei jede dieser Abtastgruppen einer anderen Winkelposition des zweidimensionalen oder dreidimensionalen Rotationsnetzes (REA) von Aufnahmeelementen entspricht.

2. Interferometer-Radiometer, das sich an Bord eines Raumfahrzeugs befindet, nach Anspruch 1 und das an die Bilderstellung einer Planetenoberfläche (ED) angepasst ist,

3. Interferometer-Radiometer nach Anspruch 1 oder 2, bei dem das Netz (REA) von Aufnahmeelementen im Wesentlichen zweidimensional und senkrecht zur Rotationsachse (z) verläuft.

4. Interferometer-Radiometer nach einem der vorhergehenden Ansprüche, wobei die Abstände zwischen den Aufnahmeelementen (201, 202) weder konstant noch ganzzahlige Vielfache eines Minimalabstandes sind.

5. Interfero-Radiometer nach Anspruch 4, wobei die Anordnung der Aufnahmeelemente (201, 202) in einer solchen Weise ausgewählt wurde, dass eine nicht gleichmäßige Verteilung der Abtastungen der Sichtbarkeitsfunktion (V) in einem zweidimensionalen Bereich von Raumfrequenzen definiert wird, wobei sichergestellt wird, dass die Nebenzipfel eines synthetisierten Aufnahmediagramms des Interfero-Radiometers eine normalisierte Amplitude aufweisen, die kleiner oder gleich -20 dB und vorzugsweise kleiner oder gleich -40 dB ist.

6. Interfero-Radiometer nach Anspruch 4 oder 5, wobei die Anordnung der Aufnahmeelementen (201, 202) derart ist, dass die Verteilung der Abtastungen der Sichtbarkeitsfunktion (V) in einem zweidimensionalen Bereich von Raumfrequenzen durch eine Apodisationsfunktion angenähert werden kann, wie z.B. eine Gauß-Funktion, eine Kosinusfuktion, ein Hamming-Fenster und ein Hanning-Fenster.

7. Interfero-Radiometer nach einem der vorhergehenden Ansprüche, wobei die Einrichtung (ROT) zur Rotation des zweidimensionalen oder dreidimensionalen Netzes (REA) angepasst ist, mit einer Rotationsgeschwindigkeit zwischen 0,001 und 100 U/min, vorzugsweise zwischen 0,01 und 10 U/min und stärker bevorzugt zwischen 0,1 und 1 U/min betrieben zu werden.

8. Interfero-Radiometer nach einem der vorhergehenden Ansprüche, wobei die Aufnahmeelemente (201, 202) angepasst sind, eine elektromagnetische Strahlung in zumindest einem Frequenzband, das sich im Spektralbereich von 1 GHz -1 THz befindet, aufzunehmen.

9. Interfero-Radiometer nach Anspruch 8, wobei die Aufnahmeelemente (201, 202) angepasst sind, eine elektromagnetische Strahlung in zumindest einem Frequenzband, das sich im Spektralbereich von 30 GHz - 400 GHz befindet, aufzunehmen.

10. Interfero-Radiometer nach einem der Ansprüche 8 oder 9, bei dem die Breite des zweidimensionalen oder dreidimensionalen Netzes (REA) von Aufnahmeelementen senkrecht zur Rotationsachse (z) ausreichend ist, um eine Winkelauflösung des rekonstruierten Intensitätsbildes herbeizuführen, die kleiner oder gleich 7 Milliradianten und vorzugsweise kleiner oder gleich 1 Milliradianten ist, zumindest in dem Frequenzband.

11. Interfero-Radiometer nach einem der vorhergehenden Ansprüche, bei dem die Anzahl und die Anordnung der Aufnahmeelemente (201, 202) derart sind, dass nach einer halben Rotation des zweidimensionalen oder dreidimensionalen Rotationsnetzes (REA) die Abtastdichte, die sich für die Sichtbarkeitsfunktion (V) ergibt, ausreichend ist, um ein nicht mehrdeutiges Sichtfeld herbeizuführen, das eine Breite größer oder gleich 17° aufweist, zumindest in dem Frequenzband.

12. Interfero-Radiometer nach einem der vorhergehenden Ansprüche, bei dem die Rotationsachse (z) den Trägheitsmittelpunkt des zweidimensionalen oder dreidimensionalen Netzes (REA) von Aufnahmeelementen im Wesentlichen durchquert.

13. Interfero-Radiometer nach einem der vorhergehenden Ansprüche, bei dem die Aufnahmeelemente (201, 202) entlang einer Vielzahl von Lineararmen (A1, A2, A3) ausgerichtet sind.

14. Interfero-Radiometer nach Anspruch 13, bei dem die Aufnahmeelemente (201, 202) entlang von drei Lineararmen (A1, A2, A3) ausgerichtet sind, die einen Winkelabstand von 120° die einen in Bezug auf die anderen in einer Weise haben, dass ein Y-Netz (REA) gebildet wird, wobei die Rotationsachse (z) den Mittelpunkt des Netzes durchquert.

15. Interfero-Radiometer nach Anspruch 13 oder 14, bei die die Anzahl und die Abstände der Aufnahmeelemente (201, 202) auf den genannten Lineararmen (A1, A2, A3) identisch sind.

16. Interfero-Radiometer nach einem der vorhergehenden Ansprüche, bei dem die erste Signalverarbeitungseinrichtung (SP1) angepasst ist, um eine Vielzahl von relativen Zeitverschiebungen (τ) zwischen den aufgenommenen Signalen einzuführen, bevor die Kreuzkorrelation ausgeführt wird, und um die Sichtbarkeitsfunktionen (V) in Abhängigkeit von der Zeitverschiebung zu berechnen, wobei die zweite Signalverarbeitungseinrichtung (SP2) angepasst ist, ein Mehrband-Bild (MI) der Strahlungsemission zu rekonstruieren, indem eine Fouriertransformation der Sichtbarkeitsfunktionen in Abhängigkeit von der Zeitverschiebung ausgeführt wird.

17. Interfero-Radiometer nach einem der vorhergehenden Ansprüche, die ferner eine Einrichtung (CM) zum Kalibrieren der Relativphase aufweist, wobei diese Kalibriereinrichtung (CM) angepasst ist, um die Abtastgruppen der Sichtbarkeitsfunktion (V) entsprechend unterschiedlichen Winkelpositionen des Rotationsnetzes (REA) von Aufnahmeelemente zu vergleichen und die Informationen der Kalibrierung der Relativphase als Resultat aus dem Vergleich zu sammeln.

18. Interferometer-Radiometer nach einem der vorhergehenden Ansprüche, das ferner eine Einrichtung (CM) zum Kalibrieren der relativen Amplitude aufweist, wobei diese Kalibriereinrichtung (CM) angepasst ist, die Abtastgruppen der Sichtbarkeitsfunktion (V) entsprechend unterschiedlichen Winkelpositionen des Rotationsnetzes (REA) von Aufnahmeelementen zu vergleichen und die Informationen der Kalibrierung der Relativamplitude als Resultat aus dem Vergleich zu sammeln.

19. Interferometer-Radiometer nach Anspruch 17 oder 18, wobei die Kalibriereinrichtung (CM) angepasst ist, die Abtastgruppen der Sichtbarkeitsfunktion (V) entsprechend unterschiedlichen Winkelpositionen des Rotationsnetzes (REA) von Aufnahmeelementen, die um eine halbe Rotation versetzt sind, zu vergleichen.

20. Interferometer-Radiometer nach einem der Ansprüche 17 bis 19, bei dem das Rotationsnetz (REA) von Aufnahmeelementen zumindest näherungsweise eine diskrete Rotationssymmetrie aufweist und bei der die Kalibriereinrichtung (CM) angepasst ist, um die Abtastgruppen der Sichtbarkeitsfunktion (V) entsprechend unterschiedlichen Winkelpositionen des Rotationsnetzes (REA) von Aufnahmeelementen, die um einen Winkel versetzt sind, der der diskreten Rotationssymmetrie entspricht, zu vergleichen.

21. Interfero-Radiometer nach einem der vorhergehenden Ansprüche, bei dem die Aufnahmeelemente (201, 202) angepasst sind, zwischen zwei Polarisationsbestandteile die aufgenommene Strahlung zu unterscheiden, und bei der die zweite Signalverarbeitungseinrichtung (SP2) angepasst ist, zwei Intensitätsbilder entsprechend unterschiedlichen Polarisationsbestandteilen für die Strahlungsemission zu rekonstruieren.

22. Interfero-Radiometer nach Anspruch 21, bei dem die zweite Signalverarbeitungseinrichtung (SP2) angepasst ist, die Stokes-Parameter der aufgenommenen Strahlung zu berechnen.

23. Mehrband-Interfero-Radiometer mit einer Vielzahl von einzelnen Interfero-Radiometern nach einem der vorhergehenden Ansprüche, wobei die zweidimensionalen oder dreidimensionalen Netze (REA-53, REA-118, REA-183, REA-380) von entsprechenden Aufnahmeelementen an einer gemeinsamen Rotationsstruktur (STR) montiert sind, wobei jedes einzelne der Interfero-Rotationselemente angepasst ist, um in einem unterschiedlichen Spektralband zu arbeiten.

24. Mehrband-Interfero-Radiometer nach Anspruch 23, das eine Vielzahl von Interfero-Radiometern aufweist, bei denen die Aufnahmeelemente (201, 202) entlang einer Vielzahl von Lineararmen (A1, A2, A3) ausgerichtet sind, wobei die entsprechenden Lineararme (A1, A2, A3) der einzelnen Interfero-Radiometern zueinander parallel verlaufen.

FIG.1

FIG.2

FIG.3

FIG.5

FIG.4A

STR

A3

REA-53

REA-183

REA-380

REA-118

A1

A2

REA-53

REA-183

REA-118

REA-380

FIG.4B

SAT

ROT

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. H. LAMBRIGSTEN ; P. P. KANGASLAHTI ; A. B. TANNER ; W. J. WILSON.** A Microwave Sounder for GOES-R: A GeoSTAR Progress Report. *14ème International TOVS Study Conference,* 25 Mai 2005

- **B. LAMBRIGSTEN et al.** GeoSTAR - a synthetic aperture approach for a geostationary microwave sounder. *IEEE Aerospace Conference Proceedings,* 06 Mars 2004, vol. 2, 1008-1014
- **A. J. CAMPS CARMONA.** Application of Interferometric Radiometry to Earth Observation. Universitat Politècnica de Catalunya, 1996